(19) **Europäisches Patentamt European Patent Office Office européen des brevets**

(11) **EP 2 965 287 B1**

(12) **FASCICULE DE BREVET EUROPEEN**

(45) Date de publication et mention de la délivrance du brevet:
**22.02.2017 Bulletin 2017/08**

(21) Numéro de dépôt: **14706605.4**

(22) Date de dépôt: **26.02.2014**

(51) Int Cl.:
***G06T 7/20*** (2017.01)

(86) Numéro de dépôt international:
**PCT/EP2014/053671**

(87) Numéro de publication internationale:
**WO 2014/135404 (12.09.2014 Gazette 2014/37)**

(54) **PROCÉDÉ DE SUIVI D'UNE CIBLE DANS UNE SÉQUENCE D'IMAGES AVEC PRISE EN COMPTE DE LA DYNAMIQUE DE LA CIBLE**

VERFAHREN ZUR VERFOLGUNG EINES ZIELS IN EINER BILDSEQUENZ UNTER BERÜCKSICHTIGUNG DER DYNAMIK DES ZIELS

METHOD FOR TRACKING A TARGET IN AN IMAGE SEQUENCE, TAKING THE DYNAMICS OF THE TARGET INTO CONSIDERATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.03.2013 FR 1351914**

(43) Date de publication de la demande:
**13.01.2016 Bulletin 2016/02**

(73) Titulaire: **Commissariat à l'Énergie Atomique et aux Énergies Alternatives 75015 Paris (FR)**

(72) Inventeurs:
• **MAGGIO, Simona**
 **F-91191 Gif-sur-Yvette Cedex (FR)**
• **LUVISON, Bertrand**
 **F-91191 Gif-sur-Yvette Cedex (FR)**
• **PHAM, Quoc Cuong**
 **F-91191 Gif-sur-Yvette Cedex (FR)**

(74) Mandataire: **HAMMES, Pierre Marks & Clerk France Immeuble Visium 22, avenue Aristide Briand 94117 Arcueil Cedex (FR)**

(56) Documents cités:

• **BENNETT ET AL: "Enhanced tracking and recognition of moving objects by reasoning about spatio-temporal continuity", IMAGE AND VISION COMPUTING, ELSEVIER, GUILDFORD, GB, vol. 26, no. 1, 7 novembre 2007 (2007-11-07), pages 67-81, XP022334789, ISSN: 0262-8856, DOI: 10.1016/J.IMAVIS.2005.08.012**
• **WANG JIANGFENG ET AL: "Object Tracking and Primitive Event Detection by Spatio-Temporal Tracklet Association", IMAGE AND GRAPHICS, 2009. ICIG '09. FIFTH INTERNATIONAL CONFERENCE ON, IEEE, PISCATAWAY, NJ, USA, 20 septembre 2009 (2009-09-20), pages 457-462, XP031652776, ISBN: 978-1-4244-5237-8**
• **WEIZHI NIE ET AL: "Multiple Person Tracking by Spatiotemporal Tracklet Association", ADVANCED VIDEO AND SIGNAL-BASED SURVEILLANCE (AVSS), 2012 IEEE NINTH INTERNATIONAL CONFERENCE ON, IEEE, 18 septembre 2012 (2012-09-18), pages 481-486, XP032248270, DOI: 10.1109/AVSS.2012.89 ISBN: 978-1-4673-2499-1**
• **KAAWAASE KYANDA SWAIB ET AL: "A selective review on target tracking algorithms", INTERNATIONAL CONFERENCE ON GRAPHIC AND IMAGE PROCESSING (ICGIP 2011), SPIE, 1000 20TH ST. BELLINGHAM WA 98225-6705 USA, vol. 8285, no. 1, 1 octobre 2011 (2011-10-01), pages 1-10, XP060019193, DOI: 10.1117/12.913410**

• YILMAZ ALPER ET AL: "Object Tracking: A Survey", ACM COMPUTING SURVEYS, ACM, NEW YORK, NY, US, US, vol. 38, no. 4, 1 décembre 2006 (2006-12-01), pages 1-45, XP007902942, ISSN: 0360-0300

**Description**

L'invention se situe dans le domaine de la vidéosurveillance et, plus particulièrement, dans le domaine du suivi d'objet en temps réel. Elle concerne un procédé de suivi d'une cible dans une séquence d'images et s'applique en particulier dans des environnements publics à grande fréquentation.

Avec l'évolution des moyens de traitement d'images vidéo, les images issues de la vidéosurveillance sont de plus en plus analysées par un algorithme de traitement vidéo. Un système de vidéosurveillance peut notamment intégrer un algorithme permettant de suivre des objets d'intérêt, comme des individus, dans une séquence d'images. Ces objets d'intérêt sont appelés des cibles. Un algorithme de suivi d'objets doit faire face à différentes contraintes, et en particulier à des occultations temporaires des cibles. Ces occultations peuvent être dues à des éléments fixes de la scène - on parle dans ce cas d'occultation d'environnement -, ou à des éléments mobiles tels que des personnes - on parle alors d'occultation d'objet. Une occultation peut être partielle, si la cible reste en partie visible, ou totale, si la cible est complètement invisible dans la scène. Par exemple, dans le cas d'une occultation partielle d'une personne, la tête et le buste peuvent rester visibles, alors que les jambes sont cachées par une autre personne plus proche de la caméra. Lorsque l'occultation est importante, l'algorithme de suivi ne peut pas observer dans la scène la cible qu'il est censé suivre. Il en résulte une erreur dans la localisation de la cible qui se propage généralement de plus en plus pendant la durée de l'occultation. Cette erreur peut devenir irréversible si l'algorithme de suivi peut difficilement discriminer la cible des autres objets qui la cachent. Le cas peut par exemple se présenter si la cible a une apparence similaire à celle des autres objets.

Dans un contexte de suivi dit "multi-cible", c'est-à-dire lorsque plusieurs objets d'intérêt - voire tous les objets mobiles de la scène - sont suivis simultanément, il est possible de modéliser les interactions entre les objets en fonction de leurs déplacements, et donc de déterminer les occultations en présence. Par exemple, la demande de brevet GB 2 452 512 A (GB 07 17277) décrit un procédé de gestion des occultations comprenant une étape de ré-identification. Cette ré-identification n'a pas forcément lieu aussitôt que les objets impliqués dans l'occultation sont à nouveau séparés. Tant que l'ambiguïté due à l'occultation n'a pas été résolue, les parcours des objets impliqués dans l'occultation sont étiquetés avec les identifiants de tous ces objets. L'ambiguïté perdure pendant quelques images, jusqu'à ce que les différentes cibles soient à nouveau identifiées. Le parcours de chaque cible peut être retrouvé à posteriori en remontant dans le temps. Une autre solution permettant de gérer le suivi d'objets en présence d'occultation repose sur une association globale, c'est-à-dire l'optimisation simultanée de plusieurs trajectoires de cibles. Chaque trajectoire est constituée par une séquence de segments de pistes, appelée "tracklet". Les techniques d'association globale sont très efficaces, mais requièrent un coût de calcul élevé les rendant inappropriées pour un suivi en temps réel. Le document Junliang XING, Haizhou AI, Shihong LAO: "Multi-Object Tracking through Occlusions by Local Tracklets Filtering and Global Tracklets Association with Detection Responses", Computer Vision and Pattern Recognition, 2009, décrit l'utilisation d'un algorithme de suivi par filtrage particulaire supporté par une méthode d'association globale sur une fenêtre temporelle réduite. Cette solution permet de conserver une possibilité de traitement en temps réel et une optimisation globale des trajectoires des objets. Le filtre basé sur les détections détermine la position optimale des cibles, et donc leur piste, et sélectionne les observations les plus significatives pour chaque cible. En parallèle, les observations détectées par un classificateur de personnes sont associées image par image selon l'affinité dans la position, la taille et l'apparence, en générant des tracklets potentielles. Ces tracklets potentielles sont associées aux pistes issues du filtre afin d'optimiser les trajectoires finales. Cette étape d'association globale est réalisée sur la base de similarités de taille, d'apparence et de dynamique des pistes. Lorsqu'une cible ne peut plus être observée, par exemple à cause d'une occultation, le filtre est arrêté et la piste ne peut être continuée que par association globale avec une tracklet potentielle basée sur des détections. L'une des limites de cette solution vient de la confiance absolue donnée au filtre. Tant que le filtre répond positivement à son modèle d'observation, aucun contrôle sur son résultat n'est effectué, l'association globale n'étant exploitée que pour combler les éventuelles coupures des trajectoires fournies par le filtre.

La situation est plus complexe pour un suivi dit "mono-cible", où un seul objet d'intérêt, par exemple une personne, est suivi, bien que plusieurs autres objets soient en mouvement dans la scène. Dans ce contexte, les observations des voisins de la cible, qui ne sont pas suivis, ne sont pas attribués à des objets. Ainsi, lorsque la cible est occultée, ces observations peuvent être attribuées à tort à la cible. Le même problème se présente avec un suivi multi-cibles, lorsque certains objets ne sont pas suivis. Pourtant, un suivi multi-cible robuste vis-à-vis des occultations et basé sur des techniques d'association globale peut difficilement être réalisé en temps réel dans un lieu public très fréquenté, comme une gare ou un aéroport. Or un suivi en temps réel revêt une importance particulière lorsque la position d'un individu suspect doit être communiquée à des agents de sécurité. Un individu peut notamment devenir suspect lorsqu'il accède à une zone interdite, lorsqu'il abandonne un bagage ou lorsqu'il agresse une personne.

On connait par ailleurs le document « Enhanced tracking and recognition of moving objects by reasoning about spatio-temporal continuity, BENNETT et AL, November 7 2007 » qui concerne également le domaine du suivi d'objets en temps réel.

Un but de l'invention est notamment de remédier à tout ou partie des inconvénients précités en proposant un procédé de suivi d'une cible unique ou d'un nombre limité de cibles dans une séquence d'images qui soit fiable tout en permettant un traitement en temps réel. A cet effet, l'invention repose sur une combinaison d'une technique d'association globale avec un algorithme de suivi visuel de la cible basé sur des signatures visuelles. Ainsi, l'algorithme de suivi visuel peut compenser les faiblesses du détecteur, notamment lors de l'absence de détections, et la technique d'association globale permet de guider l'algorithme de suivi en lui fournissant des informations sur le voisinage. Plus précisément, l'invention a pour objet un procédé de suivi d'une cible dans une séquence d'images représentant une scène, le procédé comprenant, pour chaque image courante :

- une étape de détection d'objets dans la scène, chaque objet détecté étant caractérisé par une position et une dimension dans l'image courante,
- une étape d'association temporelle, dans laquelle il est tenté d'associer chaque objet détecté dans l'image courante à un objet détecté dans la précédente image de la séquence en fonction de leurs positions respectives dans les images, chaque ensemble d'objets détectés dans une suite continue d'images formant une tracklet, l'une des tracklets étant assignée à une première cible,
- une étape de détermination d'une deuxième cible dans l'image courante, l'objet détecté correspondant le mieux à une zone de recherche déterminée pour une image antérieure de la séquence étant assigné à la deuxième cible,
- une étape de comparaison entre l'identité de l'objet détecté assigné à la première cible et l'identité de l'objet détecté assigné à la deuxième cible,
- dans le cas d'identités différentes, une étape de détermination de l'objet détecté correspondant le mieux à une dynamique d'une cible finale,
- dans le cas où la première cible correspond le mieux à la dynamique de la cible finale, une étape de mise à jour de la zone de recherche pour l'image courante à partir de la position de la première cible,
- dans le cas où la deuxième cible correspond le mieux à la dynamique de la cible finale, une étape de mise à jour de la zone de recherche pour l'image courante à partir de la position de la deuxième cible, et
- une étape de recherche de la cible finale dans la zone de recherche pour l'image courante par comparaison de zones de l'image courante avec un modèle de référence représentatif de la cible finale.

Selon une variante particulière de réalisation, le procédé selon l'invention comporte en outre, dans le cas où l'objet détecté assigné à la première cible est le même que celui assigné à la deuxième cible, une étape de mise à jour de la zone de recherche pour l'image courante à partir de la position de la première et de la deuxième cible.

Selon une variante particulière de réalisation, le procédé selon l'invention comporte en outre, suite à l'étape d'association temporelle, une étape de prolongement de la tracklet de la première cible lorsque ladite tracklet n'a pas été complétée par un objet détecté dans l'image courante, la tracklet de la première cible étant complétée par une observation virtuelle en fonction d'une dynamique d'une cible finale.

Selon une variante particulière de réalisation, le procédé selon l'invention comporte en outre, dans le cas où aucun objet détecté n'a été assigné à la deuxième cible :

- une étape dans laquelle il est déterminé si l'objet détecté dans l'image courante associé à la première cible est compatible avec la dynamique de la cible finale, et
- en cas de compatibilité, une étape de mise à jour de la zone de recherche pour l'image courante à partir de la position de la première cible.

Selon une variante particulière de réalisation, le procédé selon l'invention comporte en outre, dans le cas où aucun objet détecté n'a été assigné à la première cible :

- une étape dans laquelle il est déterminé si l'objet détecté assigné à la deuxième cible n'appartient pas à une tracklet autre que celle de la cible, et
- dans le cas où cet objet détecté n'appartient pas à une autre tracklet que celle de la cible, une étape de mise à jour de la zone de recherche pour l'image courante à partir de la position de la deuxième cible.

Selon une variante particulière du procédé selon l'invention, l'étape de mise à jour de la zone de recherche à partir de la position de la deuxième cible comprend, en outre, une correction de la tracklet de la première cible, l'objet détecté assigné à la première cible étant substitué par l'objet détecté assigné à la deuxième cible.

L'invention présente notamment l'avantage de pouvoir confirmer ou corriger la position de la cible en fonction de sa dynamique.

L'invention sera mieux comprise et d'autres avantages apparaîtront à la lecture de la description qui va suivre, faite en regard de dessins annexés sur lesquels :

- la figure 1 représente un exemple de dispositif permettant de mettre en oeuvre le procédé de suivi selon l'invention ;
- la figure 2 représente un exemple d'étapes du procédé de suivi selon l'invention ;
- la figure 3 représente un exemple de sous-étapes d'une étape d'analyse spatio-temporelle ;

- la figure 4 illustre les différentes situations de détection pouvant se produire, et un exemple de traitement à effectuer dans chacune de ces situations.

L'invention concerne un procédé de suivi d'une cible dans une séquence d'images vidéo numériques représentant une scène surveillée, par exemple un hall de gare ou d'aéroport. La séquence d'images vidéo est également appelée flux vidéo. Pour la suite de la description, on considère un suivi mono-cible, c'est-à-dire le suivi d'une seule cible à la fois. Le procédé de suivi pourrait néanmoins être adapté à un suivi multi-cibles à nombre limité de cibles, c'est-à-dire un suivi d'un nombre de cibles inférieur au nombre d'objets présents dans la scène. De même, l'invention est décrite en considérant un flux vidéo provenant d'une seule source. Néanmoins, l'invention pourrait aussi être adaptée pour exploiter des flux vidéo issus de plusieurs sources. Une source comprend généralement une caméra vidéo. La caméra vidéo peut être fixe ou motorisée. Une caméra motorisée est également appelée caméra "Pan-Tilt-Zoom" (PTZ) selon la dénomination anglo-saxonne. Ce type de caméras permet de focaliser les images vidéo sur une région particulière de la scène surveillée.

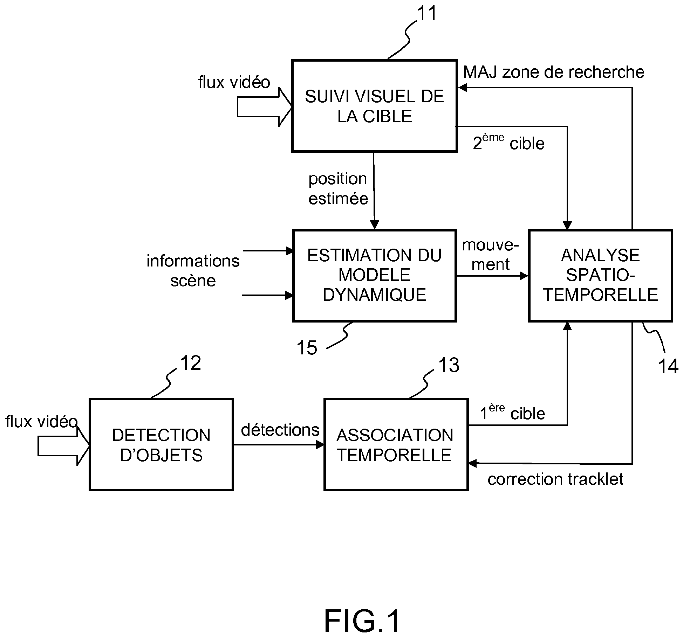

La figure 1 représente, par un schéma synoptique, un exemple de dispositif permettant de mettre en oeuvre le procédé de suivi selon l'invention. Le dispositif 10 comprend un module 11 de suivi visuel, un module 12 de détection d'objets, un module 13 d'association temporelle et un module 14 d'analyse spatio-temporelle des relations entre une cible et son voisinage. En outre, le dispositif 10 peut comporter un module 15 d'estimation de la dynamique d'une cible suivie. Le module 11 de suivi visuel et le module 12 de détection d'objets reçoivent chacun un même flux vidéo. Le module 12 de détection d'objets vise à détecter un ensemble d'objets d'intérêt parmi lesquels peut se trouver la cible. Le module 13 d'association temporelle exploite les données du module 12 de détection d'objets afin d'établir des liens entre les différents objets d'intérêt détectés dans la séquence d'images. Plus précisément, le module 13 vise à associer chaque objet d'intérêt détecté dans une image à un autre objet d'intérêt détecté dans les images précédentes de la séquence. Dans la mesure où l'un des objets d'intérêt est censé constituer la cible, le module 13 d'association temporelle permet d'estimer la position de la cible. On dit que le module 13 d'association temporelle donne un premier avis sur la détection de la cible. Pour la suite de la description, on appelle "cible de l'association temporelle" ou "première cible" la cible estimée par le module 13 d'association temporelle, c'est-à-dire l'objet d'intérêt détecté dans l'image courante qui est associé à la cible. Par ailleurs, le module 11 de suivi visuel détermine, parmi les objets d'intérêt détectés par le module 12 de détection d'objets, celui qui correspond le mieux à une zone de recherche. Cet objet d'intérêt est appelé "cible du suivi visuel", ou "deuxième cible". On dit que le module 11 de suivi visuel donne un deuxième avis sur la détection de la cible. Le module 14 d'analyse spatio-temporelle analyse ensuite si la première et la deuxième cible sont identiques. En cas de désaccord entre le module 13 d'association temporelle et le module 11 de suivi visuel, le module 14 effectue un arbitrage en fonction d'un modèle dynamique de la cible fourni par le module 15 d'estimation de la dynamique. La position de la cible (première ou deuxième) correspondant le mieux à la dynamique de la cible est utilisée pour mettre à jour la zone de recherche. Cette zone de recherche définie pour une image courante est utilisée de deux manières pour l'image suivante de la séquence. Comme indiqué précédemment, la zone de recherche est tout d'abord utilisée pour déterminer la deuxième cible parmi les objets d'intérêt détectés par le module 12 de détection d'objets. De plus, la zone de recherche est utilisée par le module 11 de suivi visuel comme zone dans laquelle la cible doit être recherchée. La cible ainsi détectée est considérée comme étant le résultat du procédé de suivi pour l'image courante. Elle est appelée "cible finale". Il est à noter que la détection de la cible finale est indépendante des détections obtenues par le module 12 de détection d'objets. Autrement dit, la cible finale ne correspond pas nécessairement à l'un des objets d'intérêt détectés.

Les différents modules du dispositif de vidéosurveillance 10 selon l'invention peuvent être mis en oeuvre sous forme logicielle et/ou sous forme matérielle. Les différents modules peuvent notamment être mis en oeuvre par un processeur et une mémoire. Le processeur peut être un processeur générique, un processeur spécifique, un circuit intégré propre à une application (connu aussi sous le nom anglais d'ASIC pour « Application-Specific Integrated Circuit ») ou un réseau de portes programmables in situ (connu aussi sous le nom anglais de FPGA pour « Field-Programmable Gate Array »).

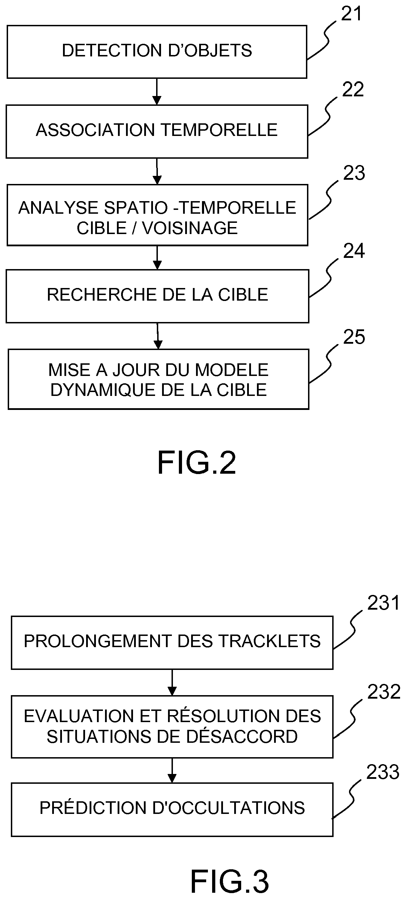

La suite de la description décrit plus en détail le fonctionnement du procédé de suivi selon l'invention. La figure 2 représente un exemple d'étapes du procédé de suivi d'une cible selon l'invention. Le procédé comprend successivement, pour chaque image de la séquence, une étape 21 de détection d'objets dans la scène, une étape 22 d'association temporelle, une étape 23 d'analyse spatio-temporelle des relations entre la cible et son voisinage, et une étape 24 de recherche de la cible. Le procédé peut aussi comporter une étape 25 de mise à jour d'un modèle dynamique de la cible.

L'étape 21 de détection d'objets consiste à détecter dans l'image courante de la séquence, un ensemble d'objets d'intérêt. Par objet d'intérêt, on entend un objet ayant au moins une caractéristique visuelle en commun avec la cible recherchée. L'ensemble des objets ayant cette caractéristique forment une classe d'objets. Par exemple, les objets d'intérêt peuvent avoir une silhouette ou une couleur similaire à celui de la cible. Ainsi, la cible doit normalement être détectée parmi les objets d'intérêt. La détection ne permet donc pas, en elle-même, de distinguer la cible des autres objets d'intérêt. L'identification de la cible parmi les objets d'intérêt est normalement effectuée une seule fois pour l'ensemble de la séquence d'images. Elle est par exemple réalisée par une désignation manuelle par un opérateur, ou au moyen du module 11 de suivi visuel. Dans ce dernier cas, l'objet détecté se trouvant le plus près de la cible estimée par le module 11 de suivi visuel est identifié comme étant la cible. Cette cible est appelée "première cible". L'étape 21 de détection peut bien entendu ne pas être complètement fiable. Elle peut produire des faux positifs, c'est-à-dire détecter des objets qui n'appartiennent pas à la classe recherchée, ainsi que des faux négatifs, c'est-à-dire manquer la détection d'objets présents dans la scène qui appartiennent à la classe recherchée. Les faux négatifs sont très fréquents pendant les périodes d'occultations, même si la couverture de la cible n'est que partielle. L'étape 21 est réalisée par le module 12 de détection d'objets. Les objets détectés sont normalement associés à une position et à une dimension dans l'image. Un objet détecté peut être modélisé par un cadre entourant cet objet. La position et la dimension (largeur et hauteur) de ce cadre dans l'image caractérisent alors l'objet détecté. La détection d'objets peut être réalisée de différentes manières, par exemple au moyen d'un traitement de soustraction de fond ou par un traitement de classification. Il est également possible de combiner plusieurs types de détection. Par ailleurs, l'étape 21 de détection peut être guidée en fonction de la détection de la cible dans la précédente image de la séquence. En l'occurrence, la détection des objets d'intérêt peut être limitée au voisinage de la cible. Par voisinage de la cible dans une image, on entend l'ensemble des positions dans cette image pour lesquelles un objet, d'intérêt ou non, placé sur cette position, est susceptible de provoquer une occultation au moins partielle de la cible. Il est possible de déterminer le voisinage d'une cible en tenant compte, par exemple, des informations tridimensionnelles de la scène.

L'étape 22 d'association temporelle consiste à essayer d'associer chaque objet détecté dans l'image courante à un objet détecté dans la précédente image. Par souci de simplification, les objets détectés dans l'image courante sont aussi appelés "détections courantes", et les objets détectés dans l'image précédente, "détections précédentes". La tentative d'association est effectuée en fonction de critères dits d'association. Bien entendu, l'un des critères d'association peut porter sur les positions respectives des détections courantes et des positions précédentes. D'autres critères d'association peuvent porter sur les dimensions respectives des détections, ou sur le taux de chevauchement entre une détection précédente et une détection courante. Selon une forme particulière de réalisation, chaque détection est représentée par une paire "position-dimensions", et les critères d'association sont la distance et le taux de chevauchement entre chaque détection précédente et chaque détection courante. L'association entre une détection précédente et une détection courante peut échouer si, par exemple, la distance minimale entre deux détections est supérieure à une distance seuil, et/ou si le taux de chevauchement est inférieur à un niveau seuil. L'étape 22 d'association temporelle peut notamment reposer sur un algorithme hongrois, aussi appelé "algorithme de Kuhn-Munkres, dans lequel le coût $c$ attribué à chaque association combine la distance $d$ et le taux de chevauchement $tc$, selon l'expression suivante :

$$c = \left(1 - \sqrt{tc}\right)\left(1 - \exp\left(- \lambda . d^2\right)\right)$$

On parle de "tentative d'association" pour l'étape 22 dans la mesure où l'association d'une détection courante et d'une détection précédente peut échouer si le ou les critères d'association choisis ne sont remplis pour aucun des appariements possibles. En effet, le nombre de détections peut varier d'une image à l'autre, à cause d'erreurs dans l'étape 21 de détection (faux positifs et faux négatifs) ou simplement du fait d'un changement du nombre d'objets d'intérêt présents dans les images ou dans les zones traitées des images. En conséquence, il peut y avoir aussi bien des détections courantes sans association que des interruptions d'association. En tout état de cause, le résultat de l'association doit faire correspondre au plus une détection précédente à chaque détection courante, et au plus une détection courante à chaque détection précédente. On appelle "piste de détection" ou "tracklet" chaque ensemble de détections associées sans interruption dans une suite d'images. L'ensemble comprenant l'objet d'intérêt identifié comme étant la première cible est appelé "tracklet de la cible". Une nouvelle tracklet est créée pour chaque détection courante qui n'a pas été associée à une détection précédente, et donc à une tracklet existante. La détection courante forme alors une tête de tracklet. À l'inverse, lorsqu'aucune détection courante n'a été associée à une tracklet existante, la tracklet est soit interrompue, soit complétée par une observation dite virtuelle de l'objet d'intérêt correspondant. La complétion d'une tracklet est expliquée plus loin.

L'étape 23 d'analyse spatio-temporelle des relations entre la cible et son voisinage comprend une analyse et une gestion des possibles situations de désaccord entre l'avis émis par le module 13 d'association temporelle, c'est-à-dire la première cible, et l'avis émis par le module 11 de suivi visuel, c'est-à-dire la deuxième cible. La figure 3 représente un exemple de sous-étapes de l'étape 23 d'analyse spatio-temporelle. L'étape 23 comprend une première sous-étape 231 de prolongement des tracklet, et une sous-étape 232 d'évaluation et de résolution d'un possible désaccord entre le module 13 d'association temporelle et le module 11 de suivi visuel. Elle peut en outre comporter une sous-étape 233 de prédiction d'occultations de la cible par d'autres objets d'intérêt.

Comme indiqué précédemment, lors de l'étape 22 d'association temporelle, il se peut qu'aucune détection courante ne puisse être associée à une détection précédente. La tracklet comprenant la détection précédente n'est alors pas prolongée pour l'image courante. L'étape 231 de prolongement des tracklets consiste à compléter les tracklets auxquelles aucune détection courante n'a été associée par des observations virtuelles. Le prolongement est de préférence au moins effectué pour la tracklet de la cible. Il peut néanmoins être effectué pour toutes les tracklets. Les tracklets sont avantageusement complétées en fonction de la dynamique de l'objet d'intérêt formant la tracklet. La tracklet de la cible peut être complétée par un déplacement de la détection précédente à une position déterminée en fonction de la vitesse bidimensionnelle ou tridimensionnelle de la cible et de la durée séparant deux images dans la séquence. La dynamique de la cible, en l'occurrence sa vitesse, peut être estimée par le module 15 d'estimation de la dynamique. Celui-ci peut déterminer la dynamique de la cible en analysant ses déplacements dans une fenêtre temporelle donnée, par exemple sur les cinq ou dix dernières images de la séquence. La dynamique de la cible pourrait aussi être estimée à partir de données fournies par d'autres dispositifs, par exemple des capteurs de distance et/ou des capteurs de vitesse, ou encore à partir de données statistiques selon le type de cible. La tracklet d'un voisin de la cible peut être complétée de manière analogue à celle de la cible. À titre d'exemple, il est possible de générer une observation virtuelle pour un voisin en considérant une vitesse moyenne de ce voisin sur les cinq dernières images de la séquence. Chaque tracklet peut être complétée par plusieurs observations virtuelles successives. Cependant, dans la mesure où l'incertitude sur la position de l'objet d'intérêt grandit avec le temps, il est possible de prévoir un arrêt de la tracklet en cas de non détection d'un objet d'intérêt après un nombre donné d'images.

La sous-étape 232 d'évaluation et de résolution d'un possible désaccord entre le module 13 d'association temporelle et le module 11 de suivi visuel comprend tout d'abord une détermination de la deuxième cible, c'est-à-dire une détermination, parmi les objets d'intérêt détectés par le module 12 de détection d'objets, de celui qui correspond le mieux à la zone de recherche définie pour l'image courante. La deuxième cible peut par exemple correspondre à la détection située à la plus courte distance du centre de la zone de recherche. Ensuite, le module 14 d'analyse spatio-temporelle évalue si la première et la deuxième cible sont identiques, c'est-à-dire s'ils correspondent au même objet d'intérêt détecté. Si tel n'est pas le cas, cela signifie qu'un désaccord existe. Le module 14 se charge alors de le résoudre en accord avec la dynamique de la cible. Il est à noter qu'à la fois la détermination de la première cible et celle de la deuxième cible peuvent échouer. En effet, il se peut qu'aucune détection courante ou, le cas échéant, aucune observation virtuelle, n'ait été associée à la tracklet de la cible, et que la zone de recherche ne contienne aucun objet d'intérêt.

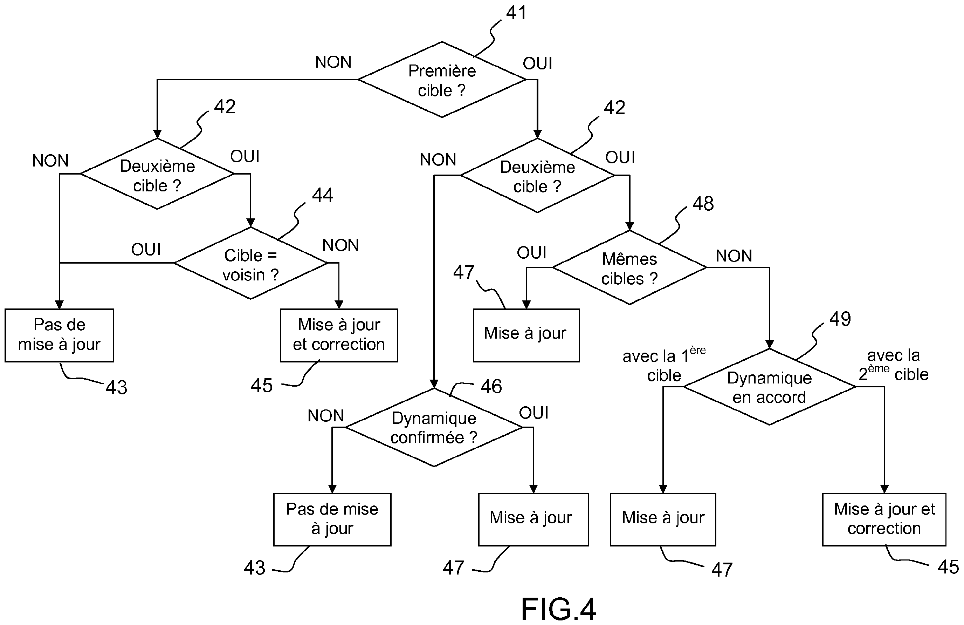

La figure 4 illustre les différentes situations de détection pouvant se produire, et un exemple de traitement à effectuer dans chacune de ces situations. Dans des étapes 41 et 42, on détermine si une première et une deuxième cible ont été détectées pour l'image courante. Dans le cas où aucun objet d'intérêt n'a pu être attribué à la fois à la première cible et à la deuxième cible, aucune information sur la position de la cible finale n'est disponible. Ainsi, dans une étape 43, il est mis fin à la sous-étape 232 d'évaluation et de résolution d'un possible désaccord. La zone de recherche n'est donc pas mise à jour. Dans le cas où aucun objet d'intérêt n'a été associé à la première cible, mais qu'une deuxième cible a été déterminée, on détermine dans une étape 44 si la deuxième cible ne correspond pas à l'un des objets d'intérêt voisins, c'est-à-dire une détection courante associée à une tracklet d'un voisin. Si la deuxième cible appartient effectivement à une tracklet d'un voisin, il est mis fin à la sous-étape 232 dans l'étape 43 sans mise à jour de la zone de recherche. À la place de la sous-étape 232, il est possible de modifier la zone de recherche en excluant la zone voisine de la deuxième cible. Si la deuxième cible n'appartient pas à une tracklet d'un voisin, c'est qu'elle constitue un nouvel objet d'intérêt pour lequel aucune tracklet n'a encore été formée. Ainsi, dans une étape 45, la deuxième cible est associée à la tracklet de la cible, et la zone de recherche est mise à jour à partir de la position de cette deuxième cible. Dans le cas où seule une première cible a été déterminée, on détermine dans une étape 46 si la première cible est en accord avec la dynamique de la cible. Par exemple, la déviation entre la vitesse de la tracklet de la cible (terminant avec la première cible), estimée sur les dernières dix images, et la direction de mouvement de la cible, estimée par le module 15, peut être utilisée comme critère de test. Si cette déviation est inférieure à un seuil prédéfini, par exemple 30 degrés, on considère la première cible en accord avec la dynamique de la cible. Si tel n'est pas le cas, la première cible n'est pas prise en considération pour la suite du procédé et il est mis fin à la sous-étape 232 dans l'étape 43 sans mise à jour de la zone de recherche. Si, en revanche, la première cible est en accord avec la dynamique de la cible, dans une étape 47, la zone de recherche est mise à jour pour l'image courante à partir de la position de la première cible. Dans le cas où à la fois une première cible et une deuxième cible ont été déterminées, on détermine dans une étape 48 si ces cibles sont identiques, c'est-à-dire si le même objet d'intérêt a été associé à chacune des cibles. Si tel est le cas, alors la zone de recherche est mise à jour à partir de la position des cibles dans l'étape 47. Si la première et la deuxième cible ne sont pas identiques, le module 14 d'analyse spatio-temporelle doit résoudre la situation de désaccord et déterminer s'il est plus probable que la véritable cible soit la première cible ou la deuxième cible. Ainsi, dans une étape 49, il est déterminé si la cible la plus en accord avec la dynamique de la cible est la première ou la deuxième cible. Cette étape 49 peut par exemple être réalisée en comparant les directions prises par la première et par la deuxième cible par rapport à une direction de la cible estimée par le module 15 d'estimation de la dynamique. La direction prise par la première cible est estimée à partir de sa position dans une image antérieure de la séquence et de celle dans l'image courante. De même, la direction prise par la deuxième cible est estimée à partir de sa position dans la même image antérieure et de celle dans l'image courante. La dynamique de la cible est de préférence déterminée à partir des positions de la cible finale. Ainsi, la direction de la cible estimée par le module 15 peut être estimée à partir de sa position dans une image antérieure de la séquence, et celle dans l'image courante. On considère par exemple les différentes directions prises depuis les cinq dernières images de la séquence. Dans le cas où c'est la première cible qui est le plus en accord avec la dynamique de la cible, la zone de recherche est mise à jour dans l'étape 47 à partir de la position de la première cible. Dans le cas où la deuxième cible est le plus en accord avec la dynamique de la cible, la zone de recherche est mise à jour dans l'étape 45 à partir de la position de la deuxième cible. En outre, dans cette étape 45, la tracklet de la cible est corrigée avec la deuxième cible. Plus précisément, la détection courante de la tracklet de la cible est substituée par la deuxième cible.

La sous-étape 233 de prédiction d'occultations de la cible par d'autres objets d'intérêt est facultative. Elle consiste à déterminer si des objets d'intérêt voisins de la première cible et/ou de la deuxième cible peuvent occulter au moins partiellement la cible dans les prochaines images d'une fenêtre temporelle prédéfinie de la séquence. Cette sous-étape est effectuée à partir des tracklets des voisins et d'une estimation de leur dynamique. Lorsqu'une telle prédiction est réalisée, la mise à jour de la zone de recherche lors de l'étape 45 ou 47 et/ou l'étape 24 de recherche de la cible peuvent différer selon qu'une occultation est possible ou non. En particulier, la focalisation de la zone de recherche peut être plus intense si une occultation est possible. En particulier, si l'on prédit une occultation partielle de la cible, où la plupart de l'objet est visible, la zone de recherche est focalisée autour de la détection sélectionnée par la sous-étape 232 (première ou deuxième cible), mais avec un rayon de recherche assez grand. Dans cette situation le module 11 n'est pas fortement pénalisé et reste fiable, donc sa zone de recherche peut rester assez étendue, comme dans le suivi ordinaire. Au contraire, une forte occultation prédite exige une focalisation plus resserrée de la zone de recherche. La durée de l'occultation doit aussi être tenue en compte pour réduire l'intensité de la focalisation de la zone de recherche, car une longue durée implique une plus grande incertitude sur la position de la cible occultée. Selon une forme particulière de réalisation, le rayon de la zone de recherche est variable, avec une valeur initiale dépendante du degré d'occultation prédit et grandissant avec la durée de l'occultation jusqu'à une valeur maximale.

L'étape 24 de recherche de la cible consiste à rechercher, dans la zone de recherche mise à jour ou non, la position de la cible. Cette cible est qualifiée de "finale". La recherche de la cible est effectuée par le module 11 de suivi visuel en comparant différentes zones de l'image courante couvrant la zone de recherche avec un modèle de référence représentatif de la cible. Tout modèle de référence peut être utilisé, comme par exemple un modèle géométrique (rectangle, ellipse, etc...) dans lequel des signatures visuelles, comme des histogrammes de couleurs ou de textures caractérisant les pixels contenus dans le modèle, peuvent être calculées. À titre d'exemple, la recherche de la cible peut reposer sur une méthode utilisant un filtre à particules dit "Sequential Importance Resamplig" (SIR), par exemple décrit dans le document Michael ISARD and Andrew BLAKE: "Condensation - conditional density propagation for visuel tracking", International journal of computer vision, 1998. Dans cette méthode, la zone de recherche est explorée en tirant des particules, représentant des positions hypothétiques de la cible, selon une loi de probabilité, et en privilégiant les particules de plus forte vraisemblance selon un critère d'apparence visuelle. La loi de probabilité peut être une distribution gaussienne centrée sur une position. Lorsque l'étape 24 de recherche de la cible est dépendante du fait qu'une occultation a été ou non considérée comme possible dans la sous-étape 233, la zone de recherche peut être mise à jour en fixant une borne pour le tirage de particules autour de la cible retenue (première ou deuxième cible). Le tirage de chaque particule est réalisé un nombre fixe de fois, en conservant seulement les particules tombées dans la zone de recherche. Cela permet de favoriser la présence de particules dans la borne, mais sans changer directement la loi de proposition des particules, ni leur distribution.

L'étape 25 de mise à jour 25 du modèle dynamique de la cible consiste à mettre à jour le modèle dynamique de la cible en fonction de la dernière cible finale déterminée lors de l'étape 24.

## Revendications

1. Procédé de suivi d'une cible dans une séquence d'images représentant une scène, le procédé comprenant, pour chaque image courante :

   - une étape (21) de détection d'objets dans la scène, chaque objet détecté étant **caractérisé par** une position et une dimension dans l'image courante,
   - une étape (22) d'association temporelle, dans laquelle il est tenté d'associer chaque objet détecté dans l'image courante à un objet détecté dans la précédente image de la séquence en fonction de leurs positions respectives dans les images, chaque ensemble d'objets détectés dans une suite continue d'images formant une tracklet, l'une des tracklets étant assignée à une première cible,

■ une étape (232) de détermination d'une deuxième cible dans l'image courante, l'objet détecté correspondant le mieux à une zone de recherche déterminée pour une image antérieure de la séquence étant assigné à la deuxième cible,

■ une étape (48) de comparaison entre l'identité de l'objet détecté assigné à la première cible et l'identité de l'objet détecté assigné à la deuxième cible,

■ dans le cas d'identités différentes, une étape (49) de détermination de l'objet détecté correspondant le mieux à une dynamique d'une cible finale,

■ dans le cas où la première cible correspond le mieux à la dynamique de la cible finale, une étape (47) de mise à jour de la zone de recherche pour l'image courante à partir de la position de la première cible,

■ dans le cas où la deuxième cible correspond le mieux à la dynamique de la cible finale, une étape (45) de mise à jour de la zone de recherche pour l'image courante à partir de la position de la deuxième cible, et

■ une étape (24) de recherche de la cible finale dans la zone de recherche pour l'image courante par comparaison de zones de l'image courante avec un modèle de référence représentatif de la cible finale.

2. Procédé selon la revendication 1 comprenant, en outre, dans le cas où l'objet détecté assigné à la première cible est le même que celui assigné à la deuxième cible, une étape (47) de mise à jour de la zone de recherche pour l'image courante à partir de la position de la première et de la deuxième cible.

3. Procédé selon l'une des revendications 1 et 2, comprenant, en outre, suite à l'étape (22) d'association temporelle, une étape (231) de prolongement de la tracklet de la première cible lorsque ladite tracklet n'a pas été complétée par un objet détecté dans l'image courante, la tracklet de la première cible étant complétée par une observation virtuelle en fonction d'une dynamique d'une cible finale.

4. Procédé selon l'une des revendications précédentes comprenant, dans le cas où aucun objet détecté n'a été assigné à la deuxième cible :

■ une étape (46) dans laquelle il est déterminé si l'objet détecté dans l'image courante associé à la première cible est compatible avec la dynamique de la cible finale, et

■ en cas de compatibilité, une étape (47) de mise à jour de la zone de recherche pour l'image courante à partir de la position de la première cible.

5. Procédé selon l'une des revendications précédentes comprenant, dans le cas où aucun objet détecté n'a été assigné à la première cible :

■ une étape (44) dans laquelle il est déterminé si l'objet détecté assigné à la deuxième cible n'appartient pas à une tracklet autre que celle de la cible, et

■ dans le cas où cet objet détecté n'appartient pas à une autre tracklet que celle de la cible, une étape (45) de mise à jour de la zone de recherche pour l'image courante à partir de la position de la deuxième cible.

6. Procédé selon l'une des revendications précédentes, dans lequel l'étape (45) de mise à jour de la zone de recherche à partir de la position de la deuxième cible comprend, en outre, une correction de la tracklet de la première cible, l'objet détecté assigné à la première cible étant substitué par l'objet détecté assigné à la deuxième cible.

7. Dispositif de vidéosurveillance comprenant des moyens adaptés pour mettre en oeuvre le procédé selon l'une quelconque des revendications 1 à 6.

**Patentansprüche**

1. Verfahren zum Verfolgen eines Ziels in einer Sequenz von eine Szene repräsentierenden Bildern, wobei das Verfahren für jedes aktuelle Bild die folgenden Schritte beinhaltet:

■ einen Schritt (21) des Erkennens von Objekten in der Szene, wobei jedes erkannte Objekt durch eine Position und eine Abmessung in dem aktuellen Bild charakterisiert ist;

■ einen Schritt (22) des zeitlichen Assoziierens, dessen Zweck es ist, jedes in dem aktuellen Bild erkannte Objekt mit einem im vorherigen Bild der Sequenz erkannten Objekt anhand seiner jeweiligen Positionen in den Bildern zu assoziieren, wobei jeder Satz von in einer kontinuierlichen Serie von Bildern erkannten Objekten ein Tracklet bildet, wobei eines der Tracklets einem ersten Ziel zugeordnet wird;

■ einen Schritt (232) des Feststellens eines zweiten Ziels in dem aktuellen Bild, wobei das erkannte Objekt, das einem für ein vorheriges Bild der Sequenz festgestellten Suchbereich am besten entspricht, dem zweiten Ziel zugeordnet wird;

■ einen Schritt (48) des Vergleichens der Identität des dem ersten Ziel zugeordneten erkannten Objekts mit der Identität des dem zweiten Ziel zugeordneten erkannten Objekts;

- einen Schritt (49) des Feststellens, im Falle von unterschiedlichen Identitäten, des erkannten Objekts, das einer Dynamik eines letzten Ziels am besten entspricht;
- einen Schritt (47) des Aktualisierens, falls das erste Ziel der Dynamik des letzten Ziels am besten entspricht, des Suchbereichs für das aktuelle Bild auf der Basis der Position des ersten Ziels;
- einen Schritt (45) des Aktualisierens, falls das zweite Ziel der Dynamik des letzten Ziels am besten entspricht, des Suchbereichs für das aktuelle Bild auf der Basis der Position des zweiten Ziels; und
- einen Schritt (24) des Suchens des letzten Ziels in dem Suchbereich für das aktuelle Bild durch Vergleichen von Zonen des aktuellen Bilds mit einem das letzte Ziel repräsentierenden Referenzmodell.

2. Verfahren nach Anspruch 1, das ferner, falls das dem ersten Ziel zugeordnete erkannte Objekt dasselbe ist wie das dem zweiten Ziel zugeordnete Objekt, einen Schritt (47) des Aktualisierens des Suchbereichs für das aktuelle Bild auf der Basis der Position des ersten und des zweiten Ziels beinhaltet.

3. Verfahren nach einem der Ansprüche 1 bis 2, das ferner, nach dem Schritt (22) des zeitlichen Assoziierens, einen Schritt (231) des Verlängerns des Tracklet des ersten Ziels beinhaltet, wenn das Tracklet nicht durch ein in dem aktuellen Bild erkanntes Objekt ergänzt wurde, wobei das Tracklet des ersten Ziels durch eine virtuelle Beobachtung in Abhängigkeit von der Dynamik eines letzten Ziels ergänzt wird.

4. Verfahren nach einem der vorherigen Ansprüche, das, falls dem zweiten Ziel kein erkanntes Objekt zugeordnet wurde, Folgendes beinhaltet:

- einen Schritt (46), in dem festgestellt wird, ob das in dem mit dem ersten Ziel assoziierten aktuellen Bild erkannte Objekt mit der Dynamik des letzten Ziels kompatibel ist; und
- einen Schritt (47) des Aktualisierens, im Falle von Kompatibilität, des Suchbereichs für das aktuelle Bild auf der Basis der Position des ersten Ziels.

5. Verfahren nach einem der vorherigen Ansprüche, das, falls dem ersten Ziel kein erkanntes Objekt zugewiesen wurde, Folgendes beinhaltet:

- einen Schritt (44), in dem festgestellt wird, ob das dem zweiten Ziel zugeordnete erkannte Objekt nicht zu einem anderen Tracklet als dem des Ziels gehört; und

- einen Schritt (45) des Aktualisierens, falls das erkannte Objekt nicht zu einem anderen Tracklet als dem des Ziels gehört, des Suchbereichs für das aktuelle Bild auf der Basis der Position des zweiten Ziels.

6. Verfahren nach einem der vorherigen Ansprüche, wobei der Schritt (45) des Aktualisierens des Suchbereichs auf der Basis der Position des zweiten Ziels ferner eine Korrektur des Tracklet des ersten Ziels beinhaltet, wobei das dem ersten Ziel zugeordnete erkannte Objekt durch das dem zweiten Ziel zugeordnete erkannte Objekt substituiert wird.

7. Videoüberwachungsgerät, das Mittel zum Ausführen des Verfahrens nach einem der Ansprüche 1 bis 6 umfasst.

**Claims**

1. A method for tracking a target in a sequence of images representing a scene, said method comprising the following for each current image:

- a step (21) of detecting objects in said scene, each detected object being **characterised by** a position and a dimension in said current image;
- a step (22) of temporal association, the intention of which is to associate each object detected in said current image with an object detected in the preceding image of the sequence according to their respective positions in the images, each set of objects detected in a continuous series of images forming a tracklet, one of the tracklets being assigned to a first target;
- a step (232) of determining a second target in said current image, the detected object best corresponding to a search area determined for a previous image of the sequence being assigned to said second target;
- a step (48) of comparing the identity of the detected object assigned to said first target and the identity of the detected object assigned to said second target;
- a step (49) of determining, in the event of different identities, the detected object best corresponding to the dynamics of a final target;
- a step (47) of updating, in the event that said first target best corresponds to the dynamics of said final target, the search area for said current image on the basis of the position of said first target;
- a step (45) of updating, in the event that said second target best corresponds to the dynamics of said final target, the search area for said current image on the basis of the position of said second target; and

- a step (24) of searching for said final target in the search area for said current image by comparing zones of said current image to a reference model representing said final target.

2. The method according to claim 1, further comprising, in the event that the detected object assigned to said first target is the same as that assigned to said second target, a step (47) of updating the search area for said current image on the basis of the position of said first and of said second target.

3. The method according to any one of claims 1 to 2, further comprising, following said step (22) of temporal association, a step (231) of extending the tracklet of said first target when said tracklet has not been supplemented by an object detected in said current image, said tracklet of said first target being supplemented by a virtual observation according to the dynamics of a final target.

4. The method according to any one of the preceding claims, comprising, in the event that no detected object has been assigned to said second target:

    - a step (46) of determining whether the object detected in said current image associated with said first target is compatible with the dynamics of said final target; and
    - a step (47) of updating, in the event of compatibility, the search area for said current image on the basis of the position of said first target.

5. The method according to any one of the preceding claims, comprising, in the event that no detected object has been assigned to said first target:

    - a step (44) of determining whether the detected object assigned to said second target does not belong to a tracklet other than that of said target; and
    - a step (45) of updating, in the event that said detected object does not belong to a tracklet other than that of said target, the search area for said current image on the basis of the position of said second target.

6. The method according to any one of the preceding claims, wherein said step (45) of updating the search area on the basis of the position of said second target further comprises a correction of the tracklet of said first target, the detected object assigned to said first target being substituted by the detected object assigned to said second target.

7. A video surveillance device comprising means adapted to implement the method according to any one of claims 1 to 6.

FIG.1

DETECTION D'OBJETS — 21

ASSOCIATION TEMPORELLE — 22

ANALYSE SPATIO -TEMPORELLE
CIBLE / VOISINAGE — 23

RECHERCHE DE LA CIBLE — 24

MISE A JOUR DU MODELE
DYNAMIQUE DE LA CIBLE — 25

# FIG.2

PROLONGEMENT DES TRACKLETS — 231

EVALUATION ET RÉSOLUTION DES
SITUATIONS DE DÉSACCORD — 232

PRÉDICTION D'OCCULTATIONS — 233

# FIG.3

FIG.4

EP 2 965 287 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- GB 2452512 A

- GB 0717277 A

**Littérature non-brevet citée dans la description**

- **JUNLIANG XING ; HAIZHOU AI ; SHIHONG LAO.** Multi-Object Tracking through Occlusions by Local Tracklets Filtering and Global Tracklets Association with Detection Responses. *Computer Vision and Pattern Recognition,* 2009

- **BENNETT et al.** *Enhanced tracking and recognition of moving objects by reasoning about spatio-temporal continuity,* 07 Novembre 2007